(19) Europäisches Patentamt / European Patent Office / Office européen des brevets

(11) **EP 1 151 964 B1**

(12) **FASCICULE DE BREVET EUROPEEN**

(45) Date de publication et mention
de la délivrance du brevet:
**19.03.2008 Bulletin 2008/12**

(51) Int Cl.:
***C01B 39/48*** *(2006.01)*   ***C01B 39/06*** *(2006.01)*
***B01J 29/04*** *(2006.01)*   ***B01J 29/70*** *(2006.01)*
***C10G 35/095*** *(2006.01)*

(21) Numéro de dépôt: **01401028.4**

(22) Date de dépôt: **23.04.2001**

(54) **Procédé de préparation d'une zéolithe de type structural EUO, la zéolithe obtenue et son utilisation en tant que catalyseur d'isomerisation des C8 aromatiques**

Verfahren zur Herstellung eines Zeoliths des EUO-typs, so erhaltener Zeolith, und dessen Verwendung als Isomerierungskatalysator von Aromaten mit acht Kohlenstoffatomen

Process for the preparation of EUO-type zeolite, zeolite produced thereby and use thereof as catalyst for isomerizing eight carbon aromatics

(84) Etats contractants désignés:
**DE ES GB IT NL**

(30) Priorité: **05.05.2000 FR 0005799**

(43) Date de publication de la demande:
**07.11.2001 Bulletin 2001/45**

(73) Titulaire: **Institut Français du Pétrole
92852 Rueil-Malmaison Cedex (FR)**

(72) Inventeurs:
• **Rouleau, Loic
69390 Charly (FR)**
• **Kolenda, Frédéric
69630 Chaponost (FR)**
• **Merlen, Elisabeth
92500 Rueil-Malmaison (FR)**
• **Alario, Fabio
92200 Neuilly sur Seine (FR)**

(56) Documents cités:
**EP-A- 0 042 226        EP-A- 0 159 845
US-A- 5 405 596**

• **CASCI J L ET AL: "SYNTHESIS AND CHARACTERISATION OF ZEOLITE EU-1" PROCEEDINGS OF THE INTERNATIONAL ZEOLITE CONFERENCE, 1984, XP002108428**
• **THANGARAJ A ET AL: "Structure and location of the organic base in zeolite EU-1 by C CP-MAS n.m.r" ZEOLITES;ZEOLITES JAN 1991, vol. 11, no. 1, janvier 1991 (1991-01), pages 69-72, XP000980567**
• **SOUVERIJNS WIM ET AL.: "Molecular shape selectivity of EUO zeolites" MICROPOROUS MATERIALS, vol. 4, no. 2,3, 1995, pages 1223-1230, XP000980507**

**Description**

**Domaine technique**

La présente invention concerne un procédé de préparation d'une zéolithe de type structural EUO contenant, après synthèse, dans sa porosité intracristalline, un cation organique azoté de formule chimique définie et synthétisée à l'aide de germes afin d'obtenir une zéolithe présentant une composition chimique de sa charpente cristalline bien déterminée. L'invention concerne également la zéolithe préparée par ce procédé et l'utilisation de ladite zéolithe dans un procédé d'isomérisation des composés aromatiques à 8 atomes de carbone encore appelés « coupes C8 aromatiques » en présence d'un catalyseur à base d'une zéolithe EUO préparée selon le procédé de la présente invention.

**Art antérieur**

L'isomérisation en xylènes de l'éthylbenzène ou d'un mélange de xylènes et d'éthylbenzène nécessite la présence d'une fonction acide et d'un métal du groupe VIII. Le but principal de l'isomérisation des coupes C8 aromatiques est de produire du paraxylène qui est l'isomère le plus recherché en raison de son application notamment dans l'industrie du textile. La réaction d'isomérisation des C8 aromatiques conduit à des réactions parasites résultant de l'ouverture de cycles naphténiques suivie ou non de craquage ou encore de réactions de dismutation et/ou de transalkylation des aromatiques en C8 générant des composés aromatiques non désirés.

Il a déjà été décrit des catalyseurs pour l'isomérisation des composés aromatiques à 8 atomes de carbone. Les brevets US-A-4,723,051 et US-A-4,665,258 décrivent par exemple des formulations optimisées à base de zéolithes mordénites et d'un métal du groupe VIII mais elles conduisent à des catalyseurs avec lesquels les réactions parasites restent non négligeables. Ces catalyseurs manquent de sélectivité en paraxylène au profit des réactions parasites précitées qui constituent des pertes nettes pour la réaction d'isomérisation recherchée.

D'autres travaux ont montré que les zéolithes de type structural EUO présentent des performances catalytiques améliorées, notamment en terme d'activité, lorsque lesdites zéolithes sont utilisées comme catalyseur dans les réactions d'isomérisation des coupes C8 aromatiques. En particulier, la demande de brevet européenne EP-A-0 923 987 de la demanderesse concerne des catalyseurs préparés avec une zéolithe de type structural EUO présentant une bonne dispersion et une bonne résistance mécanique du métal du groupe VIII et qui donnent de bonnes sélectivités

Les zéolithes de type structural EUO sont décrites dans l'art antérieur (W.M. Meier et D.H. Olson, «Atlas of Zeolites Structure Types», 4$^{ème}$ Edition, 1996) et présente un réseau microporeux monodimensionnel, dont le diamètre des pores est de 4,1 x 5,7 Å (1 Å = 1 Angström = 1.10$^{-10}$ m). N.A. Briscoe *et al* ont enseigné que ces canaux monodimensionnels possèdent des poches latérales de profondeur 8,1 Å et de diamètre 6,8 x 5,8 Å (Zeolites, 8, 74, 1988).

Les zéolithes de type structural EUO comprennent la zéolithe EU-1, la zéolithe TPZ-3 et la zéolithe ZSM-50 et ont généralement la formule suivante sous forme anhydre : 0-100 $XO_2$ : 0-10 $T_2O_3$ : 0-20 $R_{2/n}O$: où R représente un cation de valence n, X représente le silicium et/ou le germanium, T représente au moins un élément choisi parmi l'aluminium, le fer, le gallium, le bore, le titane, le vanadium, le zirconium, le molybdène, l'arsenic, l'antimoine, le chrome et le manganèse.

De manière générale, les méthodes de préparation de zéolithes de type structural EUO comprennent le mélange en milieu aqueux d'une source d'un élément X, d'une source d'un élément T, d'une source d'un métal alcalin et d'un composé organique azoté jouant le rôle de structurant.

La zéolithe EU-1, décrite dans la demande de brevet européenne EP-A-0 042 226, est préparée en utilisant comme structurant soit le dérivé alkylé d'une polyméthylène α-ω diammonium, soit un produit de dégradation dudit dérivé soit encore des précurseurs dudit dérivé, le structurant se trouvant après synthèse dans la porosité intracristalline de ladite zéolithe (A. Moini *et al*, Zeolites, 14, 1994). Cette demande décrit également un procédé de synthèse dans lequel des germes zéolithiques de même nature ou de nature différente de la zéolithe EU-1 à synthétiser sont introduits dans le mélange réactionnnel. Cette zéolithe EU-1 présente préférentiellement un rapport X/T compris entre 5 et 75.

La zéolithe TPZ-3, décrite dans la demande de brevet européenne EP-A-0 051 318, est préparée en utilisant la même famille de structurant que celle employée pour synthétiser la zéolithe EU-1. Il est notamment décrit l'utilisation du composé 1,6-N,N,N,N',N',N'-hexaméthylhexaméthylènediammonium. La synthèse de la TPZ-3 est éventuellement effectuée en présence de germes de zéolithe TPZ-3. Cette zéolithe TPZ-3 présente préférentiellement un rapport X/T compris entre 10 et 125.

La zéolithe ZSM-50, décrite dans les documents EP-A-0 159 845 et US-A-4,640,829, est préparée en utilisant comme structurant le dérivé dibenzyldiméthylammonium (DBDMA), lequel est contenu dans la porosité intracristalline de ladite zéolithe (A. Thangaraj et al, Zeolites, 11, 1991).

Les modes de synthèse des zéolithes de type structural EUO diffèrent essentiellement par la nature du structurant organique et celles des germes, lorsque le mélange en contient, ainsi que par la composition chimique du mélange (rapport X/T).

Ainsi, une zéolithe EUO, obtenue dans un procédé de préparation utilisant le dérivé DBDMA, se distingue essentiellement, après la synthèse, des zéolithes EUO obtenues dans un procédé de synthèse avec les composés de polyméthylène α-ω diammonium, par la nature du cation présent dans la porosité intracristalline. Il est de plus décrit dans la litérature que la structure d'une zéolithe EUO, obtenue avec le DBDMA, diffère de celle d'une zéolithe EUO obtenue avec les composés de polyméthylène α-ω diammonium par la disposition des atomes d'aluminium au sein du réseau cristallin (W. Souverijns et al. Microporous Materials 4 123-130 (1995)).

Alors que la famille des structurants utilisés pour synthétiser les zéolithes EU-1 et TPZ-3 semble favoriser l'obtention de zéolithes à faible rapport Si/Al, des structurants tels que le DBDMA favorisent l'obtention de zéolithes à haut rapport Si/Al. Ainsi, le brevet US-A-4,640,829 décrit une méthode de préparation d'une zéolithe ayant un rapport Si/Al supérieur à 125 et enseigne que le DBDMA est particulièrement efficace pour favoriser la nucléation et la croissance de cristaux de zéolithes ZSM-50 ayant un rapport Si/Al élevé. Il est de plus rapporté qu'à un rapport Si/Al inférieur à 125, le produit obtenu ne contient pas majoritairement la zéolithe ZSM-50. De même, Rao et al, (Zeolites, 9, 483-490, 1989) ont décrit la synthèse d'une zéolithe de type structural EUO à l'aide d'un mélange de benzyldiméthylammonium et de chlorure de benzyle, la zéolithe obtenue présentant un taux de cristallinité d'autant meilleur que le rapport Si/Al est plus élevé. Rao enseigne, par ailleurs, que pour de nombreuses applications catalytiques, il est préférable d'utiliser des zéolithes ayant un rapport Si/Al élevé.

## Résumé de l'invention

La présente invention est basée sur la découverte d'un procédé de préparation d'une zéolithe de type structural EUO, synthétisée en présence d'un structurant organique azoté du type dibenzyldiméthyammonium (DBDMA) et présentant un rapport X/T compris entre 5 et 50 où X est choisi parmi le silicium et le germanium et T est choisi parmi l'aluminium, le fer, le gallium, le bore, le titane, le vanadium, le zirconium, le molybdène, l'arsenic, l'antimoine, le chrome et le manganèse. La préparation de la zéolithe est réalisée en présence de germes d'au moins un matériau zéolithique de même type structural que la zéolithe à synthétiser et, de préférence, de composition chimique de la charpente cristalline proche de celle de la zéolithe à synthétiser. La zéolithe obtenue par le procédé selon l'invention est une nouvelle zéolithe de type structural EUO présentant un rapport Si/Al compris entre 5 et 50, de préférence entre 6 et 35, de manière plus préférée entre 7 et 30 et de manière encore plus préférée entre 7 et 26. Elle se différencie des zéolithes EU-1 et TPZ-3 en ce qu'elle contient, après synthèse, le cation organique DBDMA et elle se différencie de la zéolithe ZSM-50 par son faible rapport Si/Al. L'invention concerne également l'utilisation de ladite zéolithe comme élément d'un catalyseur mis en oeuvre dans les procédés de transformation d'hydrocarbures et notamment dans les procédés d'isomérisation des C8 aromatiques.

## Intérêt de l'invention

Le procédé de préparation de l'invention, réalisé en présence d'un structurant dérivé du dibenzyldiméthylammonium (DBDMA) et de germes, permet d'obtenir, de façon surprenante, une nouvelle zéolithe de type structural EUO de faible rapport Si/Al, avec un rendement maximal en produit pur et une durée optimale de cristallisation.

La zéolithe de type structural EUO préparé selon le procédé de l'invention et utilisée comme catalyseur, en association avec au moins un liant, au moins un métal choisi parmi les éléments du groupe VIII, ledit métal étant déposé de préférence sur le liant, présente des performances catalytiques améliorées en transformation d'hydrocarbures en terme d'activité, comme par exemple en isomérisation des coupes C8 aromatiques, c'est-à-dire de mélanges constitués de xylènes et éventuellement d'éthylbenzène. En particulier, il a été découvert, de manière surprenante, qu'une zéolithe de type structural EUO synthétisée à l'aide du DBDMA et présentant un rapport Si/Al inférieur à 50, conduit à un catalyseur plus actif et plus sélectif que ceux à base de zéolithes EUO synthétisées également à l'aide de DBDMA mais présentant un rapport Si/Al supérieur à 50. Un catalyseur à base de la zéolithe EUO préparée selon le procédé de l'invention permet également de réduire les pertes nettes constituées par les sous-produits formés par les réactions secondaires.

## Description de l'invention

La présente invention concerne un procédé de synthèse d'une zéolithe de type structural EUO comprenant au moins un élément X choisi parmi le silicium et le germanium et au moins un élément T choisi parmi l'aluminium, le fer, le gallium, le bore, le titane, le vanadium, le zirconium, le molybdène, l'arsenic, l'antimoine, le chrome et le manganèse, ledit procédé étant réalisé en présence d'un structurant organique dérivé du dibenzyldiméthylammonium (DBDMA) ou de ses précurseurs et en présence de germes d'au moins un matériau zéolithique de même structure que la zéolithe à synthétiser de manière à obtenir une zéolithe EUO présentant un rapport X/T compris entre 5 et 50, de préférence entre 6 et 35, de manière plus préférée entre 7 et 30 et de manière encore plus préférée entre 7 et 26.

La zéolithe préparée selon le procédé de l'invention contient, après synthèse, et avant calcination et/ou échange ionique, le cation DBDMA dans sa porosité intracristalline.

Le procédé de synthèse selon l'invention comprend le mélange en milieu aqueux d'au moins une source d'au moins un élément X choisi parmi le silicium et le germanium, d'au moins une source d'au moins un élément T choisi parmi l'aluminium, le fer, le gallium, le bore, le titane, le vanadium, le zirconium, le molybdène, l'arsenic, l'antimoine, le chrome et le manganèse, d'au moins un composé organique azoté Q choisi parmi les dérivés de dibenzyldiméthylammonium et les précurseurs correspondants auxdits dérivés, et des germes S d'au moins un matériau zéolithique de type structural EUO.

Avantageusement, les germes zéolithiques de type structural EUO présentent un rapport X/T compris entre 5 et 100, où X et T sont définis comme précédemment. De façon très préférée, la zéolithe à préparer et les germes zéolithiques utilisés lors du procédé de préparation comprennent les mêmes éléments X et T.

De manière préférée, le rapport X/T desdits germes est compris entre 5 et 50. De manière plus préférée, il est compris entre 6 et 35 et de manière encore plus préférée, il est compris entre 7 et 30. Très préférentiellement, les germes ont la même composition cristalline que celle de la zéolithe EUO à préparer c'est-à-dire qu'ils présentent le même rapport Si/Al que celui de la zéolithe que l'on prépare.

Le structurant organique Q peut être un sel de dibenzyldiméthylammonium tel que par exemple l'halogénure, l'hydroxyde, le sulfate, le silicate ou l'aluminate.

Les sels de dibenzyldiméthylammonium peuvent être obtenus à partir de précurseurs. Des précurseurs particulièrement appropriés sont la benzyldiméthylamine et l'halogénure de benzyle ou l'alcool benzylique. Ils peuvent être utilisés tels quels in situ ou peuvent être préchauffés ensemble dans le récipient de réaction de préférence en solution avant l'addition des autres réactifs nécessaires pour la synthèse de la zéolithe de type structural EUO.

Les matériaux zéolithiques jouant le rôle de germes peuvent être introduits lors du procédé de l'invention sous plusieurs formes. Ainsi les germes peuvent être introduits après avoir subi au moins l'une des étapes choisie parmi les étapes suivantes : lavage, séchage, calcination et échange ionique. Les germes peuvent également être introduits sous la forme brute de synthèse.

Les matériaux zéolithiques jouant le rôle de germes peuvent être introduits à n'importe quel moment du procédé de préparation de la zéolithe que l'on cherche à synthétiser. Les germes peuvent être introduits en même temps que les sources des éléments X et T, que le structurant organique Q, ou les germes peuvent être introduits en premier dans le mélange aqueux ou encore les germes peuvent être introduits après l'introduction des sources des éléments X et T et du structurant. De préférence, les germes sont introduits après homogénéisation au moins en partie du mélange aqueux contenant les sources des éléments X et T et ledit structurant organique.

La taille des particules de germes zéolithiques pouvant avoir une influence sur le processus de synthèse, il convient de choisir des germes présentant une taille de particules telle que les conditions de synthèse soient optimales. On entend par particule de germes zéolithiques, soit un cristal de zéolithe soit un agrégat de cristaux de zéolithe où un agrégat est un ensemble formé par au moins deux cristaux de zéolithe ayant au moins un point de contact entre eux. Ainsi, au moins la majeure partie (c'est-à-dire au moins 90 % en volume) des particules de germes introduites lors de la préparation de la zéolithe EUO ont une taille comprise entre 0,001 et 500 $\mu$m, de préférence entre 0,005 et 250 $\mu$m et de manière encore plus préférée entre 0,005 et 200 $\mu$m.

Dans une mise en oeuvre particulière, indépendante ou non de la mise en oeuvre précédente, il est avantageux d'ajouter au milieu réactionnel au moins un sel de métal alcalin ou d'ammonium P. On peut citer par exemple des radicaux acides forts tels que du bromure, du chlorure, de l'iodure, du sulfate, du phosphate ou du nitrate, ou des radicaux acides faibles tels que les radicaux acides organiques, par exemple du citrate ou de l'acétate. Ce sel peut accélérer la cristallisation de la zéolithe de type structural EUO à partir du mélange réactionnel.

Dans le procédé de préparation selon l'invention, le mélange réactionnel a la composition suivante, exprimée sous la forme d'oxyde :

| | |
|---|---|
| $XO_2/T_2O_3$ (mol/mol) | 10-100 |
| $OH^-/XO_2$ (mol/mol) | 0,002 à 2,0 |
| $Q/XO_2$ (mol/mol) | 0,002 à 2,0 |
| $Q/(M^+ + Q)$ (mol/mol) | 0,1 à 1,0 |
| $H_2O/XO_2$ (mol/mol) | 1 à 500 |
| $P/XO_2$ (mol/mol) | 0 à 5 |
| $S/XO_2$ (g/g) | 0,0001 à 0,1 |

de manière préférée, le mélange réactionnel a la composition suivante, exprimée sous la forme d'oxydes :

| | |
|---|---|
| $XO_2/T_2O_3$ (mol/mol) | 12-70 |

(suite)

| | |
|---|---|
| OH$^-$/XO$_2$ (mol/mol) | 0,005 à 1,5 |
| Q/XO$_2$ (mol/mol) | 0,005 à 1,5 |
| Q/(M$^+$+Q) (mol/mol) | 0,1 à 1,0 |
| H$_2$O/XO$_2$ (mol/mol) | 3 à 250 |
| P/XO$_2$ (mol/mol) | 0 à 1 |
| S/XO$_2$ (g/g) | 0,0005 à 0,07 |

et, de manière encore plus préférée, le mélange réactionnel a la composition suivante, exprimée sous la forme d'oxydes :

| | |
|---|---|
| XO$_2$/T$_2$O$_3$ (mol/mol) | 15-60 |
| OH$^-$/XO$_2$ (mol/mol) | 0,01 à 1 |
| Q/XO$_2$ (mol/mol) | 0,01 à 1 |
| Q/(M$^+$ + Q) (mol/mol) | 0,1 à 1,0 |
| H$_2$O/XO$_2$ (mol/mol) | 5 à 100 |
| P/XO$_2$ (mol/mol) | 0 à 0,25 |
| S/XO$_2$ (g/g) | 0,001 à 0,04 |

où

X est le silicium et/ou le germanium,
T est au moins un élément choisi parmi l'aluminium, le fer, le gallium, le bore, le titane, le vanadium, le zirconium, le molybdène, l'arsenic, l'antimoine, le chrome et le manganèse,
M$^+$ représente un métal alcalin ou l'ion ammonium,
Q représente le structurant organique ou les précurseurs dudit structurant,
S représente les germes de zéolithe présents sous la forme brute, séchée, calcinée ou échangée,
P représente le sel de métal alcalin ou d'ammonium.

La zéolithe préparée par le procédé de l'invention présente un rapport X/T compris entre 5 et 50, de préférence entre 6 et 35, de manière préférée entre 7 et 30 et de manière encore plus préférée entre 7 et 26.

M et/ou Q peuvent être présents sous forme d'hydroxydes ou de sels d'acides inorganiques ou organiques à la condition que le critère OH$^-$ / XO$_2$ soit satisfait.
La quantité de structurant organique par rapport à la quantité d'oxyde XO$_2$ est comprise entre 0,002 et 2, et de préférence entre 0,005 et 1,5, et de manière encore plus préférée entre 0,01 et 1
La quantité de germes introduite par rapport à la quantité d'oxyde XO$_2$ est comprise entre 0,01 et 10 %, et de préférence entre 0,05 et 7 %, et de manière encore plus préférée entre 0,1 et 4 %.
Le métal alcalin (M$^+$) préféré est le sodium. L'élément préféré X est le silicium. L'élément T préféré est l'aluminium.

La source de silicium peut être l'une quelconque de celles dont l'utilisation est habituellement envisagée pour la synthèse des zéolithes, par exemple la silice solide en poudre, l'acide silicique, la silice colloïdale ou la silice en solution. Parmi les silices en poudre utilisables, il convient de citer les silices précipitées, spécialement celles obtenues par précipitation à partir d'une solution d'un silicate de métal alcalin, comme les « Zeosil » ou les « Tixosil », produites par Rhodia, les silices pyrogénées telles que les «Aerosil » produites par Degussa et les «Cabosil» produites par Cabot et les gels de silice. Des silices colloïdales de diverses granulométries peuvent être utilisées, comme celles vendues sous les marques déposées «LUDOX» de Dupont, et «SYTON» de Monsanto. Les silices dissoutes utilisables sont notamment les verres solubles ou silicates commercialisés contenant : 0,5 à 6,0 et spécialement 2,0 à 4,0 moles de SiO$_2$ par mole d'oxyde de métal alcalin et les silicates obtenues par dissolution de silice dans un hydroxyde de métal alcalin, un hydroxyde d'ammonium quaternaire ou un mélange de ceux-ci.

La source d'aluminium est le plus avantageusement l'aluminate de sodium, mais peut aussi être l'aluminium, un sel d'aluminium, par exemple le chlorure, le nitrate ou le sulfate, un alcoolate d'aluminium ou l'alumine elle-même qui de préférence se trouve sous une forme hydratée ou hydratable comme l'alumine colloïdale, la pseudoboehmite, la boehmite, l'alumine gamma, ou les trihydrates.

On peut utiliser des mélanges des sources citées ci-dessus. Des sources combinées de silicium et d'aluminium peuvent aussi être mises en oeuvre telles que les silice-alumines amorphes ou certaines argiles.

Le mélange de réaction est habituellement mis à réagir sous la pression autogène, éventuellement avec apport d'un gaz, par exemple d'azote, à une température comprise entre 85 et 250°C jusqu'à ce qu'il se forme des cristaux de la zéolithe, ce qui peut durer de 1 minute à plusieurs mois suivant la composition des réactifs, le mode de chauffage et de mélange, la température de travail et l'agitation. L'agitation est facultative, mais préférable, parce qu'elle abrège la durée de réaction.

Au terme de la réaction, la phase solide est collectée sur un filtre et lavée. A ce stade là, la zéolithe EUO obtenue selon le procédé de l'invention est dite brute de synthèse et contient dans sa porosité intracristalline le cation DBDMA. La zéolithe est alors prête pour les opérations suivantes comme le séchage, la calcination et l'échange d'ions.

Ainsi, afin d'obtenir la forme hydrogène de la zéolithe de type structural EUO, on peut effectuer un échange d'ions avec un acide, spécialement un acide minéral fort comme l'acide chlorhydrique, sulfurique ou nitrique, ou avec un composé tel que le chlorure, le sulfate ou le nitrate d'ammonium. L'échange d'ions peut être effectué par dilution en une ou plusieurs fois avec la solution d'échange d'ions. La zéolithe peut être calcinée avant ou après l'échange d'ions, ou entre deux étapes d'échange d'ions, de préférence avant l'échange d'ions afin d'éliminer toute substance organique incluse, dans la mesure où l'échange d'ions s'en trouve facilité.

En règle générale, le ou les cations de la zéolithe de type structural EUO, peuvent être remplacés par un ou des cations quelconques de métaux et en particulier ceux des groupes IA, IB, IIA, IIB, IIIA, IIIB (y compris les terres rares), VIII (y compris les métaux nobles) de même que par le plomb, l'étain et le bismuth (tableau périodique dans "Handbook of Physics and Chemistry", 76ème édition). L'échange est réalisé au moyen de sels hydrosolubles quelconques contenant le cation approprié.

La présente invention concerne également l'utilisation de la zéolithe EUO telle que préparée selon le procédé de la présente invention comme solide acide pour la catalyse dans les domaines du raffinage et de la pétrochimie c'est-à-dire que la zéolithe brute de synthèse a été calcinée et échangée. Elle peut également être utilisée comme adsorbant pour le contrôle de la pollution ou comme tamis moléculaire pour la séparation. Avantageusement, elle est utilisée comme germes pour la synthèse de zéolithes de tout type structural. Lorsqu'elle est utilisée sous forme de germes, elles peut aussi bien se présenter sous sa forme brute de synthèse que sous sa forme calcinée ou que sous sa forme échangée

Par exemple, lorsqu'elle est utilisée comme catalyseur, la zéolithe de structure EUO, préparée selon le procédé de l'invention, est calcinée et échangée, et peut être associée à une matrice inorganique qui peut être inerte ou catalytiquement active et à une phase métallique. La matrice inorganique peut être présente simplement comme liant pour maintenir ensemble les petites particules de la zéolithe sous les différentes formes connues des catalyseurs (extrudés, pastilles, billes, poudres), ou bien peut être ajoutée comme diluant pour imposer le degré de conversion dans un procédé qui progresserait sinon à une allure trop rapide conduisant à un encrassement du catalyseur en conséquence d'une formation importante de coke. Des matrices inorganiques typiques sont notamment des matières de support pour les catalyseurs comme la silice, les différentes formes d'alumine, la magnésie, la zircone, les oxydes de titane, de bore, les phosphates d'aluminium, de titane, de zirconium, les argiles kaoliniques, les bentonites, les montmorillonites, la sépiolite, l'attapulgite, la terre à foulon, les matières poreuses synthétiques comme $SiO_2$-$Al_2O_3$, $SiO_2$-$ZrO_2$, $SiO_2$-$ThO_2$, $SiO_2$-$BeO$, $SiO_2$-$TiO_2$ ou toute combinaison de ces composés.

La zéolithe de type structural EUO préparée selon le procédé de l'invention peut aussi être associée à au moins une autre zéolithe et jouer le rôle de phase active principale ou d'additif.

La matrice inorganique peut être un mélange de différents composés, en particulier d'une phase inerte et d'une phase active.

La phase métallique est introduite sur la zéolithe seule, la matrice inorganique seule ou l'ensemble matrice inorganique-zéolithe par échange d'ions ou imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments.

Les compositions catalytiques comportant la zéolithe de type structural EUO, préparée selon le procédé de l'invention, conviennent de façon générale à la mise en oeuvre des principaux procédés de transformation d'hydrocarbures et des réactions de synthèse de composés organiques tels que les éthers.

Les compositions catalytiques comportant la zéolithe de type structural EUO, préparée selon le procédé de l'invention, trouvent avantageusement leur application dans les réactions d'isomérisation, de transalkylation et de dismutation, d'alkylation et de désalkylation, d'hydratation et de déshydratation, d'oligomérisation et de polymérisation, de cyclisation, d'aromatisation, de craquage et d'hydrocraquage, de reformage, d'hydrogénation et de déshydrogénation, d'oxydation, d'halogénation, de synthèses d'amines, d'hydrodésulfuration et d'hydrodénitrification, d'élimination catalytique des oxydes d'azote, lesdites réactions comprenant des hydrocarbures aliphatiques saturés et insaturés, des hydrocarbures aromatiques, des composés organiques oxygénés et des composés organiques contenant de l'azote et/ou du soufre, ainsi que des composés organiques contenant d'autres groupes fonctionnels.

Lorsque ladite zéolithe EUO est utilisée comme solide acide dans des réactions catalytiques, le catalyseur contient :

- au moins une zéolithe de type structural EUO, synthétisée en présence d'un structurant du type DBDMA et des germes de matériau zéolithique de type structural EUO selon le procédé décrit précédemment, ladite zéolithe se présentant au moins en partie sous forme acide c'est-à-dire sous forme hydrogène H,

- au moins un métal du groupe VIII, choisi de préférence dans le groupe constitué par le palladium et le platine et de manière encore plus préférée le platine,
- au moins un liant, de préférence l'alumine,
- éventuellement au moins un élément appartenant au groupe formé par les éléments des groupes IB, IIB, IIIA, IVA, VIB et VIIB, de préférence choisi dans le groupe formé par l'étain et l'indium,
- éventuellement du soufre.

De manière plus précise, le catalyseur comprend généralement par rapport au poids de catalyseur :

- de 1 à 90 % bornes incluses, de préférence de 3 à 75 % bornes incluses et de manière encore plus préférée de 4 à 60 % bornes incluses en poids, d'au moins une zéolithe de type structural EUO, préparée selon le procédé de l'invention, comprenant au moins un élément X choisi parmi le germanium et le silicium et au moins un élément T choisi dans le groupe formé par l'aluminium, le fer, le gallium, le bore, le titane, le vanadium, le zirconium, le molybdène, l'arsenic, l'antimoine, le chrome et le manganèse, de préférence l'aluminium et le bore, dont le rapport atomique X/T est compris entre 5 et 50, de préférence entre 6 et 35, de manière plus préférée entre 7 et 30 et de manière encore plus préférée entre 7 et 26, ladite zéolithe se présentant au moins en partie sous forme acide c'est-à-dire sous forme hydrogène H,
- de 0,01 à 10% bornes incluses, de préférence de 0,01 à 2 % bornes incluses et de manière encore plus préférée de 0,05 à 1,0 % bornes incluses en poids, d'au moins un métal du groupe VIII de la classification périodique des éléments, de préférence choisi dans le groupe formé par le platine et le palladium et de manière encore plus préférée le platine,
- éventuellement de 0,01 à 10 % bornes incluses, de préférence de 0,01 à 2% bornes incluses et de manière encore plus préférée entre 0,05 et 1,0 % bornes incluses en poids, d'au moins un élément du groupe formé par les groupes IB, IIB, IIIA, IVA, VIB et VIIB de la classification périodique des éléments, de préférence choisi dans le groupe formé par l'étain et l'indium,
- éventuellement du soufre dont la teneur est telle que le rapport du nombre d'atomes de soufre sur le nombre d'atomes de métal du groupe VIII déposés est compris entre 0,5 et 2 bornes incluses,
- le complément à 100 % en poids d'au moins un liant, de préférence de l'alumine.

Toute méthode de mise forme convient pour le présent catalyseur. On pourra utiliser, par exemple, le pastillage ou l'extrusion ou la mise sous forme de billes. La mise en forme du catalyseur selon l'invention est généralement telle que le catalyseur est de préférence sous forme d'extrudés ou de billes en vue de son utilisation.

La zéolithe de type structural EUO, préparée selon le procédé de l'invention, est traitée par au moins une étape de calcination, puis soumise à au moins un échange ionique dans au moins une solution de $NH_4NO_3$ de manière à obtenir une zéolithe dont la teneur en élément alcalin résiduel A, par exemple le sodium, est plus ou moins importante.

La zéolithe de type structural EUO, préparée selon le procédé de l'invention, et comprise dans des compositions catalytiques, est au moins en partie, de préférence pratiquement totalement, sous forme acide, c'est-à-dire sous forme hydrogène ($H^+$), la teneur en élément alcalin, par exemple le sodium, étant de préférence telle que le rapport atomique A/T est inférieur à 0,5, de préférence inférieur à 0,1, de manière encore plus préférée inférieur à 0,02.

Le liant (ou matrice) compris dans le catalyseur à base de la zéolithe EUO, préparée selon le procédé de l'invention, consiste généralement en au moins un élément choisi dans le groupe formé par les argiles, la magnésie, les alumines, les silices, l'oxyde de titane, l'oxyde de bore, la zircone, les phosphates d'aluminium, les phosphates de titane, les phosphates de zirconium et les silices alumines. De préférence le liant est une alumine.

Les métaux peuvent être introduits soit tous de la même façon, soit par des techniques différentes, à tout moment de la préparation, avant ou après mise en forme et dans n'importe quel ordre. De plus, des traitements intermédiaires tels que par exemple une calcination et/ou une réduction peuvent être appliqués entre les dépôts des différents métaux.

La préparation du catalyseur pourra être effectuée par toute méthode connue de l'homme du métier. Au moins un élément du groupe VIII est introduit dans la zéolithe ou sur le liant, de préférence sur le liant, avant ou après mise en forme.

Une méthode préférée consiste à réaliser un mélange de la matrice et de la zéolithe suivie d'une mise en forme. La mise en forme est généralement suivie d'une calcination, généralement à une température comprise entre 250°C et 600°C bornes incluses. Au moins un élément du groupe VIII de la classification périodique des éléments est introduit après cette calcination, de préférence par dépôt sélectif sur le liant. Lesdits éléments sont déposés pratiquement à plus de 90 % bornes incluses totalement sur le liant de la manière connue de l'homme du métier par contrôle des paramètres utilisés lors dudit dépôt, comme par exemple la nature du précurseur utilisé pour effectuer ledit dépôt.

Au moins un élément du groupe VIII est déposé de manière préférée sur le mélange zéolithe EUO-liant préalablement mis en forme par tout procédé connu de l'homme du métier. Un tel dépôt est par exemple effectué par la technique d'imprégnation à sec, d'imprégnation par excès ou d'échange ionique. Tous les précurseurs conviennent pour le dépôt de ces éléments. De préférence, on mettra en oeuvre un échange anionique avec de l'acide hexachloroplatinique et/ou de l'acide hexachloropalladique en présence d'un agent compétiteur, par exemple l'acide chlorhydrique. Dans ce cas, le métal est pratiquement à plus de 90 % déposé totalement sur le liant et il présente une bonne dispersion et une bonne répartition macroscopique à travers le grain de catalyseur ce qui constitue une méthode préférée de préparation.

De manière plus précise, une méthode préférée de préparation du catalyseur, utilisée dans la présente invention consiste à malaxer la zéolithe EUO, préparée selon le procédé de l'invention, dans un gel humide de matrice (obtenu généralement par mélange d'au moins un acide et d'une poudre de matrice), par exemple l'alumine, pendant une durée nécessaire à l'obtention d'une bonne homogénéité de la pâte ainsi obtenue, soit par exemple pendant une dizaine de minutes, puis à passer la pâte à travers une filière pour former des extrudés. Puis après séchage, par exemple pendant quelques heures à environ 120°C en étuve et après calcination, par exemple pendant deux heures à environ 500°C, au moins un élément, par exemple le platine, est déposé, par exemple par échange anionique avec de l'acide hexachloroplatinique en présence d'un agent compétiteur (par exemple l'acide chlorhydrique), ledit dépôt étant suivi d'une calcination par exemple pendant environ 2 heures à environ 500°C.

Eventuellement, au moins un autre élément choisi dans le groupe formé par les éléments des groupes IB, IIB, IIIA, IVA, VIB et VIIB est ajouté. On peut ajouter les éléments du groupe VIII et des groupes IB, IIB, IIIA, IVA, VIB et VIIB soit séparément à n'importe quelle étape de la préparation dudit catalyseur, soit simultanément dans au moins une étape unitaire. Lorsqu'au moins un élément des groupes IB, IIB, IIIA, IVA, VIB et VIIB est ajouté séparément, il est avantageux de l'ajouter préalablement à l'élément du groupe VIII. Toutes les techniques de dépôt connues de l'homme du métier et tous les précurseurs conviennent.

Le platine est généralement introduit dans la matrice sous forme d'acide hexachloroplatinique, mais pour tout métal noble peuvent être également utilisés des composés ammoniaqués avec, dans ce cas, dépôt du métal noble dans la zéolithe, ou peuvent être utilisés des composés tels que, par exemple, le chloroplatinate d'ammonium, le dichlorure de platine dicarbonyle, l'acide hexahydroxyplatinique, le chlorure de palladium, le nitrate de palladium. Dans le cas du platine, on peut également citer par exemple les sels de platine II tétramines de formule $Pt(NH_3)_4X_2$ ; les sels de platine IV hexamines de formule $Pt(NH_3)_6X_4$; les sels de platine IV halogénopentamines de formule $(PtX(NH_3)_5)X_3$ ; les sels de platine IV tétrahalogénodiamines de formule $PtX_4(NH_3)_2$ ; les complexes de platine avec les halogènes-polycétones et les composés halogénés de formule $H(Pt(acac)_2X)$ ; X étant un halogène choisi dans le groupe formé par le chlore, le fluor, le brome et l'iode, et de préférence X étant le chlore, et acac représentant le groupe $C_5H_7O_2$ dérivé de l'acétylacétone.

L'introduction du métal noble de la famille du platine est de préférence effectuée par imprégnation à l'aide d'une solution aqueuse ou organique de l'un des composés organométalliques cités ci-dessus. Parmi les solvants organiques utilisables, on peut citer les hydrocarbures paraffiniques, naphténiques ou aromatiques contenant de 4 à 12 atomes de carbone, et les composés organiques halogénés ayant par exemple de 1 à 12 atomes de carbone par molécule. On peut citer par exemple le n-heptane, le méthylcyclohexane, le toluène et le chloroforme. On peut aussi utiliser les mélanges de solvants.

L'élément additionnel, éventuellement introduit, choisi dans le groupe formé par les éléments des groupes IB, IIB, IIIA, IVA, VIB et VIIB, peut être introduit par l'intermédiaire de composés tels que par exemple les chlorures, les bromures et les nitrates, les alkyles d'éléments des groupes IB, IIB, IIIA, IVA, VIB et VIIB, soit par exemple dans le cas de l'étain et de l'indium, les alkylétain, le nitrate et le chlorure d'indium. Cet élément peut également être introduit sous la forme d'au moins un composé organique choisi dans le groupe constitué par les complexes dudit élément, en particulier les complexes polycétoniques du métal et les hydrocarbylmétaux tels que les alkyles, les cycloalkyles, les aryles, les alkylaryles métaux. Dans ce dernier cas, l'introduction du métal est avantageusement effectuée à l'aide d'une solution du composé organométallique dudit métal dans un solvant organique. On peut également employer des composés organohalogénés du métal. Comme composés du métal, on peut citer en particulier le tétrabutylétain dans le cas de l'étain, et le triphénylindium dans le cas de l'indium.

Le solvant d'imprégnation est choisi dans le groupe constitué par les hydrocarbures paraffiniques, naphténiques ou aromatiques contenant de 4 à 12 atomes de carbone par molécule et les composés organiques halogénés contenant de 1 à 12 atomes de carbone par molécule. On peut citer par exemple le n-heptane, le méthylcyclohexane et le chloroforme. On peut aussi utiliser des mélanges des solvants définis ci-dessus.

Le métal additionnel peut être éventuellement introduit à tout moment de la préparation, de préférence préalablement au dépôt d'un ou plusieurs métaux du groupe VIII. Si ce métal est introduit avant le métal noble, le composé du métal utilisé est généralement choisi dans le groupe constitué par l'halogénure, le nitrate, l'acétate, le tartrate, le carbonate et l'oxalate du métal. L'introduction est alors avantageusement effectuée en solution aqueuse. Mais il peut également être introduit à l'aide d'une solution d'un composé organométallique du métal par exemple le tétrabutylétain. Dans ce cas, avant de procéder à l'introduction d'au moins un métal noble, on procède à une calcination sous air.

La préparation du catalyseur comprend généralement une calcination, habituellement à une température comprise entre environ 250°C et 600°C bornes incluses, pour une durée d'environ 0,5 à 10 heures, de préférence précédée d'un séchage, par exemple à l'étuve, à une température comprise entre la température ambiante et 250°C, de préférence entre 40 et 200°C. Ladite étape de séchage est de préférence menée pendant la montée en température nécessaire pour effectuer ladite calcination.

Dans le cas où le catalyseur de la présente invention contient du soufre, le soufre est introduit sur le catalyseur mis en forme, calciné, contenant le ou les métaux cités précédemment, soit *in-situ* avant la réaction catalytique, soit *ex-situ*. La sulfuration éventuelle intervient après la réduction. Dans le cas d'une sulfuration *in situ,* la réduction, si le catalyseur n'a pas été préalablement réduit, intervient avant la sulfuration. Dans le cas d'une sulfuration *ex-situ*, on effectue la réduction puis la sulfuration. La sulfuration s'effectue en présence d'hydrogène en utilisant tout agent sulfurant bien connu de l'homme de métier, tel que par exemple le sulfure de diméthyle ou le sulfure d'hydrogène. Par exemple, le catalyseur est traité avec une charge contenant du sulfure de diméthyle en présence d'hydrogène, avec une concentration telle que le rapport atomique soufre/métal soit de 1,5. Le catalyseur est ensuite maintenu pendant environ 3 heures à environ 400°C sous débit d'hydrogène avant l'injection de la charge.

Le catalyseur à base de la zéolithe EUO préparée selon le procédé de la présente invention est très avantageusement mis en oeuvre dans les réactions d'isomérisation d'une coupe C8 aromatique, comprenant par exemple soit un mélange de xylène(s), soit de l'éthylbenzène, soit un mélange de xylène(s) et d'éthylbenzène. Ledit procédé est mis en oeuvre généralement selon les conditions opératoires suivantes :

- une température comprise entre 300°C et 500°C bornes incluses, de préférence entre 320°C et 450°C bornes incluses et de manière encore plus préférée entre 340°C et 430°C bornes incluses,
- une pression partielle d'hydrogène comprise entre 0,3 et 1,5 MPa bornes incluses, de préférence entre 0,4 et 1,2 MPa bornes incluses et de manière encore préférée entre 0,6 et 1,2 MPa bornes incluses,
- une pression totale comprise entre 0,45 et 1,9 MPa bornes incluses, de préférence entre 0,6 et 1,5 MPa bornes incluses,
- une vitesse spatiale d'alimentation, exprimée en kilogramme de charge introduite par kilogramme de catalyseur et par heure, comprise entre 0,25 et 30 $h^{-1}$ bornes incluses, de préférence entre 1 et 25 $h^{-1}$ bornes incluses, et de manière encore plus préférée entre 2 et 15 $h^{-1}$ bornes incluses.

L'invention est illustrée par les exemples suivants.

**EXEMPLE 1 (comparatif) :** Synthèse d'une zéolithe EUO de rapport Si/Al de gel égal à 58 avec les précurseurs de dibenzyldiméthylammonium comme structurant organique, selon l'art antérieur.

Les conditions de synthèse sont définies dans le tableau 1.

On prépare la solution A composée de silicium et des précurseurs de structurant en diluant 3,530 g de benzyldiméthylamine (Lancaster, 98 %) et 3,260 g de chlorure de benzyle (Fluka, 99 %) dans 42,92 g d'eau puis en ajoutant 38,45 g de sol de silice colloïdal (Ludox HS40, Dupont, 40 % $SiO_2$). On dissout ensuite 0,610 g d'hydroxyde de sodium solide (Prolabo, 99 %) et 0,496 g d'aluminate de sodium solide (Prolabo, 46 % $Al_2O_3$, 33 % $Na_2O$) dans 5,36 g d'eau pour former la solution B. On ajoute la solution A dans la solution B sous agitation puis 5,36 g d'eau. On mélange jusqu'à homogénéisation. On fait réagir le mélange résultant dans un autoclave de 125 ml sous agitation pendant 3 jours à 180°C sous pression autogène. Après refroidissement, on filtre le produit et on le lave avec 100 ml d'eau déminéralisée puis on le sèche en étuve ventilée à 120°C.

**Tableau 1 : conditions de synthèse**

| formulation du gel | |
|---|---|
| $SiO_2$ (mol) | 60 |
| $Al_2O_3$ (mol) | 0,52 |
| $Na_2O$ (mol) | 3 |
| BDMA (mol) | 6 |
| BCl (mol) | 6 |
| $H_2O$ (mol) | 1000 |

(suite)

| conditions de cristallisation | |
|---|---|
| température (°C) | 180 |
| durée (jour) | 3 |
| BDMA = benzyldiméthylamine BCI = chlorure de benzyle | |

Les résultats de diffraction des rayons X, d'analyse chimique et de spectroscopie par résonance magnétique nucléaire du carbone 13 à l'angle magique sous polarisation croisée sont reportés dans le tableau 2. Cette synthèse conduit à la zéolithe EUO pure, de cristallinité de référence, de rapport Si/Al de 56, et contenant le cation DBDMA dans sa porosité intracristalline.

Les rendements en silicium et en aluminium, c'est à dire le taux de transformation du silicium et de l'aluminium du gel en zéolithe, sont maximaux (respectivement de 93 et 99 %).

**Tableau 2 : caractéristiques du solide obtenu**

| diffraction des rayons X | |
|---|---|
| Identification de phase | EUO |
| Cristallinité (%) | 100 (référence) |
| analyses chimiques (teneurs en poids) | |
| $SiO_2$ (% poids) | 84,9 |
| $Al_2O_3$ (% poids) | 1,3 |
| $Na_2O$ (% poids) | 0,17 |
| N (% poids) | 0,56 |
| Perte au feu (PAF) (%) | 13,5 |
| spectroscopie de résonance magnétique nucléaire du carbone 13 à l'angle magique sous polarisation croisée (déplacements chimiques) | |
| Identification du composé organique inclus dans la zéolithe | DBDMA |
| -CH3 (ppm) | 47,5 |
| -CH2 (ppm) | 72,9 |
| Caromatiques (ppm) | 130 (massif) |

Cette zéolithe brute de synthèse, contenant le cation DBDMA, présentant un rapport Si/Al de 56, est synthétisée selon l'art antérieur et représente la référence pour les analyses et les évaluations catalytiques.

**EXEMPLE 2 (invention) :** Synthèse d'une zéolithe EUO à rapport Si/Al de gel égal à 30 avec les précurseurs de dibenzyldiméthylammonium comme structurant organique, selon l'invention.

Les conditions de synthèse sont définies dans le tableau 3.

On prépare la solution A composée de silicium et des précurseurs de structurant en diluant 3,530 g de benzyldiméthylamine (Lancaster, 98 %) et 3,260 g de chlorure de benzyle (Lancaster, 99 %) dans 42,79 g d'eau puis en ajoutant 38,37 g de sol de silice colloïdal (Ludox HS40, Dupont, 40 % $SiO_2$). On dissout ensuite 0,418 g d'hydroxyde de sodium solide (Prolabo, 99 %) et 0,945 g d'aluminate de sodium solide (Prolabo, 46 % $Al_2O_3$, 33 % $Na_2O$) dans 5,35 g d'eau pour former la solution B. On ajoute la solution A dans la solution B sous agitation puis 5,35 g d'eau. On mélange jusqu'à homogénéisation. On ajoute finalement 0,616 g de germes de zéolithe EUO, post synthèse, contenant le sodium et le cation hexaméthonium (1,6 triméthylammonium-hexane). Cette zéolithe est préparée avec un gel de rapport Si/Al de 30 à partir du bromure d'hexaméthonium comme structurant. On fait réagir le mélange résultant dans un autoclave de 125 ml sous agitation pendant 9 jours à 180°C sous pression autogène. Après refroidissement, on filtre le produit et on le lave avec 100 ml d'eau déminéralisée puis on le sèche en étuve ventilée à 120°C.

**Tableau 3 : conditions de synthèse**

| Formulation du gel | |
|---|---|
| SiO$_2$ (mol) | 60 |
| Al$_2$O$_3$ (mol) | 1 |
| Na$_2$O (mol) | 3 |
| BDMA (mol) | 6 |
| BCl (mol) | 6 |
| H$_2$O (mol) | 1000 |
| EUO/ SiO$_2$ (g/g) | 0,04 |
| Conditions de cristallisation | |
| température (°C) | 180 |
| durée (jour) | 9 |
| BDMA = benzyldiméthylamine BCl = chlorure de benzyle | |

Les résultats de diffraction des rayons X, d'analyse chimique et de spectroscopie par résonance magnétique nucléaire du carbone 13 à l'angle magique sous polarisation croisée sont reportés dans le tableau 4. Cette synthèse conduit à la zéolithe EUO pure, de cristallinité de 95 % par rapport à la référence, de rapport Si/Al de 26, et contenant le cation DBDMA dans sa porosité intracristalline.

Les rendements en silicium et en aluminium, c'est à dire le taux de transformation du silicium et de l'aluminium du gel en zéolithe, sont maximaux (respectivement de 87 et 99 %).

**Tableau 4 : caractéristiques du solide obtenu**

| diffraction des rayons X | |
|---|---|
| Identification de phase | EUO |
| Cristallinité (%) | 95 |
| analyses chimiques (teneurs en poids) | |
| SiO$_2$ (% poids) | 82,2 |
| Al$_2$O$_3$ (% poids) | 2,7 |
| Na$_2$O (% poids) | 0,54 |
| N (% poids) | 0,59 |
| Perte au feu (PAF) (%) | 14,2 |
| spectroscopie de résonance magnétique nucléaire du carbone 13 à l'angle magique sous polarisation croisée (déplacements chimiques) | |
| identification du composé organique inclus dans la zéolithe | DBDMA |
| -CH3 (ppm) | 48,0 |
| -CH2 (ppm) | 74,1 |
| Caromatiques (ppm) | 130 (massif) |

Cette zéolithe brute de synthèse, contenant le cation DBDMA, et présentant un rapport Si/Al de 26 est synthétisée selon un mode de synthèse qui illustre la présente invention.

**EXEMPLE 3 (comparatif)**: Synthèse d'une zéolithe EUO à rapport Si/Al de gel égal à 30 avec les précurseurs de dibenzyldiméthylammonium comme structurant organique et en l'absence de germes.

Les conditions de synthèse sont définies dans le tableau 5.
On prépare la solution A composée de silicium et des précurseurs de structurant en diluant 3,530 g de benzyldiméthylamine (Lancaster, 98 %) et 3,260 g de chlorure de benzyle (Lancaster, 99 %) dans 42,79 g d'eau puis en ajoutant 38,37 g de sol de silice colloïdal (Ludox HS40, Dupont, 40 % $SiO_2$). On dissout ensuite 0,418 g d'hydroxyde de sodium solide (Prolabo, 99 %) et 0,945 g d'aluminate de sodium solide (Prolabo, 46 % $Al_2O_3$, 33 % $Na_2O$) dans 5,35 g d'eau pour former la solution B. On ajoute la solution A dans la solution B sous agitation puis 5,35 g d'eau. On mélange jusqu'à homogénéisation. On fait réagir le mélange résultant dans un autoclave de 125 ml sous agitation pendant 9 jours à 180°C sous pression autogène. Après refroidissement, on filtre le produit et on le lave avec 100 ml d'eau déminéralisée puis on le sèche en étuve ventilée à 120°C.

**Tableau 5 : conditions de synthèse**

| Formulation du gel | |
|---|---|
| $SiO_2$ (mol) | 60 |
| $Al_2O_3$ (mol) | 1 |
| $Na_2O$ (mol) | 3 |
| BDMA (mol) | 6 |
| BCl (mol) | 6 |
| $H_2O$ (mol) | 1000 |
| BDMA = benzyldimethylamine BCl = chlorure de benzyle | |

Conditions de cristallisation : 9 jours ; T = 180°C.
Une analyse par diffraction des rayons X réalisée sur la produit obtenu après 9 jours de synthèse montre que le produit est amorphe.
Si on reproduit le même mode de synthèse mais en prolongeant la durée de réaction à 14 jours, le produit, analysé par diffraction des rayons X, est également amorphe.

**EXEMPLE 4 (comparatif) :** Préparation du catalyseur A non conforme à l'invention.

La matière première utilisée est la zéolithe EUO brute de synthèse de l'exemple 1, comprenant du DBDMA, de rapport atomique Si/Al global égal à 56 et de teneur pondérale en $Na_2O$ par rapport au poids en zéolithe EU-1 sèche de 0,17%.
Cette zéolithe EUO subit tout d'abord une calcination dite sèche à 550°C sous flux d'air durant 6 heures. Puis le solide obtenu est soumis à trois échanges ioniques dans une solution de $NH_4NO_3$ 10N, à environ 100°C pendant 4 heures pour chaque échange.
A l'issue de ces traitements, la zéolithe EUO sous forme $NH_4$ a un rapport Si/Al atomique global égal à 56, une teneur pondérale en sodium par rapport au poids de zéolithe EUO sèche de 55 ppm. La zéolithe est à nouveau séchée puis calcinée pour obtenir la forme H.
Le catalyseur A est obtenu par mélange de la zéolithe EUO et d'une alumine sur laquelle 0,33 % poids de platine a été préalablement déposé, les deux composants étant sous forme d'une poudre de granulométrie comprise entre 125 et 315 μm.
Le platine est déposé sur cette alumine extrudée par échange anionique avec de l'acide hexachloroplatinique en présence d'un agent compétiteur (acide chlorhydrique). L'alumine humide est ensuite séchée à 120°C pendant 12 heures et calcinée sous débit d'air sec à la température de 500°C pendant une heure. La phase métallique présente une dispersion de 99 % mesurée par chimisorption d'oxygène. L'alumine est ensuite broyée.
Le catalyseur A est composé en teneurs pondérales de 60 % de zéolithe EUO forme hydrogène, ayant un rapport Si/Al de 56, de 39.87 % d'alumine et de 0,13 % de platine.

**Exemple 5 (conforme à l'invention) :** Préparation du catalyseur B conforme à l'invention.

La matière première utilisée est la zéolithe EUO brute de synthèse de l'exemple 2, comprenant du DBDMA, de rapport atomique Si/Al global égal à 26 et de teneur pondérale en $Na_2O$ par rapport au poids en zéolithe EU-1 sèche de 0,54%.

Cette zéolithe EUO subit tout d'abord une calcination dite sèche à 550°C sous flux d'air durant 6 heures. Puis le solide obtenu est soumis à trois échanges ioniques dans une solution de $NH_4NO_3$ 10N, à environ 100°C pendant 4 heures pour chaque échange.

A l'issue de ces traitements, la zéolithe EUO sous forme $NH_4$ a un rapport Si/Al atomique global égal à 26, une teneur pondérale en sodium par rapport au poids de zéolithe EUO sèche de 60 ppm. La zéolithe est à nouveau séchée puis calcinée pour obtenir la forme H.

Le catalyseur B est obtenu par mélange de la zéolithe EUO et d'une alumine sur laquelle 0,33 % poids de platine (la même que celle utilisée dans l'exemple précédent) a été préalablement déposé, les deux composants étant sous forme d'une poudre de granulométrie comprise entre 125 et 315 $\mu$m.

Le catalyseur B est composé en teneurs pondérales de 10 % de zéolithe EUO forme hydrogène ayant un rapport Si/Al de 26, de 89,7 % d'alumine et de 0,3 % de platine.

**EXEMPLE 6** : Evaluation des propriétés catalytiques des catalyseurs A et B en isomérisation d'une coupe C8 aromatique.

Les performances des catalyseurs A et B ont été évaluées dans l'isomérisation d'une coupe C8 aromatique contenant principalement du méta-xylène, de l'ortho-xylène et de l'éthylbenzène sur 5 g de catalyseur en poudre. Les conditions opératoires sont les suivantes :

- température : 390°C,
- pression totale : 15 bar, (1 bar = 0,1 MPa)
- pression partielle d'hydrogène : 12 bar.

Les catalyseurs sont préalablement traités avec une charge contenant du disulfure de diméthyle (DMDS) en présence d'hydrogène, avec une concentration telle que le rapport atomique soufre/métal soit de 1,5. Le catalyseur est ensuite maintenu pendant 3 heures à 400°C sous débit d'hydrogène puis la charge est injectée.

Les catalyseurs ont été comparés en terme d'activité (par les approches à l'équilibre du paraxylène et par les conversions de l'éthylbenzène), et en terme de sélectivité par les pertes nettes à iso-approche à l'équilibre du para-xylène.

Pour le calcul des approches à l'équilibre (AEQ), les concentrations en para-xylène (%pX) sont exprimées par rapport aux trois isomères xylènes.

Les approches à l'équilibre (AEQ) sont définies de la manière suivante :

$$pX\ AEQ\ (\%) = 100\ x\ (\%pX_{effluent} - \%pX_{charge})\ /\ (\%pX_{équilibre} - \%pX_{charge})$$

Les pertes par craquage (P1) sont des pertes en AC8 sous forme de paraffines (PAR) de C1 à C8 :

$$P1(\%poids) = 100\ X\ [(\%PAR_{effluent}xpoids\ d'effluent) - (\%PAR_{charge}xpoids\ de\ charge)]\ /\ (\%AC8_{charge}xpoids\ de\ charge)$$

Les pertes par dismutation/transalkylation (P2) sont des pertes en AC8 sous forme de naphtènes autres que N8, de toluène, de benzène et de C9+ aromatiques (OAN) :

$$P2(\%poids) = 100\ X\ [(\%OAN_{effluent}xpoids\ d'effluent) - (\%OAN_{charge}xpoids\ de\ charge)]\ /\ (\%AC8_{charge}xpoids\ de\ charge)$$

La somme des pertes P1 et P2 représente les pertes nettes. L'évaluation des deux catalyseurs décrits conduisent aux résultats présentés dans le tableau 6.

Tableau 6

| Catalyseur | A (non conforme) | B (conforme) |
|---|---|---|
| pX AEQ (%) | 90,7 | 90,5 |
| conversion EB (%) | 39,3 | 40,1 |
| pertes nettes (% poids) | 4,55 | 3,36 |

On constate d'après les résultats du tableau 6 que le catalyseur B conforme à l'invention est beaucoup plus actif que le catalyseur A non conforme, puisqu'il conduit à iso-conditions opératoires à une pX AEQ égale à celle obtenue pour le catalyseur A mais pour une teneur en zéolithe nettement inférieure et avec une légère augmentation de pph. Le catalyseur B est également plus actif en conversion de l'éthylbenzène.

De plus, ces résultats montrent que la zéolithe EUO synthétisée selon le procédé de l'invention est plus sélective avec un gain de 28 % sur les pertes nettes dans la réaction d'isomérisation des aromatiques à 8 atomes de carbone.

**Revendications**

1. Procédé de préparation d'une zéolithe de type structural EUO comprenant au moins un élément X choisi parmi le silicium et le germanium et au moins un élément T choisi parmi l'aluminium, le fer, le gallium, le bore, le titane, le vanadium, le zirconium, le molybdène, l'arsenic, l'antimoine, le chrome et le manganèse **caractérisé en ce qu'**il est réalisé en présence d'un structurant organique azoté Q choisi parmi les sels de dibenzyldiméthylammonium et les précurseurs correspondants auxdits sels choisis dans la liste constituée par la benzyldiméthylamine, l'halogénure de benzyle et l'alcool benzylique et en présence de germes S d'au moins un matériau zéolithique de type structural EUO de manière à synthétiser une zéolithe EUO ayant un rapport X/T compris entre 6 et 35.

2. Procédé selon la revendication 1 **caractérisé en ce que** les germes zéolithiques de type structural EUO présentent un rapport X/T compris entre 5 et 100.

3. Procédé selon l'une des revendications 1 ou 2 **caractérisé en ce que** les germes zéolithiques de type structural EUO présentent un rapport X/T compris entre 5 et 50.

4. Procédé selon l'une des revendications 1 à 3 **caractérisé en ce que** les germes zéolithiques de type structural EUO ont une taille comprise entre 0,001 et 500 $\mu$m.

5. Procédé selon l'une des revendications 1 à 4 **caractérisé en ce qu'**il comprend le mélange en milieu aqueux d'au moins une source d'au moins un élément X, d'au moins une source d'au moins un élément T, d'au moins une source dudit structurant et des germes S d'au moins un matériau zéolithique de type structural EUO.

6. Procédé selon l'une des revendications 1 à 5 **caractérisé en ce qu'**on introduit en outre au moins un sel P de métal alcalin ou d'ammonium.

7. Procédé selon l'une des revendications 5 ou 6 **caractérisé en ce que** les germes zéolithiques de type structural EUO sont introduits à n'importe quel moment de la préparation.

8. Procédé selon l'une des revendications 5 à 7 **caractérisé en ce que** les germes zéolithiques de type structural EUO sont introduits après l'homogénéisation au moins en partie du mélange aqueux contenant la source d'éléments X, la source d'éléments T, ledit structurant organique.

9. Procédé selon l'une des revendications 5 à 8 **caractérisé en ce que** le mélange réactionnel lors de la synthèse a la composition suivante, exprimée sous forme d'oxydes :

$XO_2/T_2O_3$ (mol/mol)    12-70
$OH^-/XO_2$ (mol/mol)    0,005 à 1,5
$Q/XO_2$ (mol/mol)    0,005 à 1,5
$Q/(M^+ + Q)$    0,1 à 1,0

(suite)

| (mol/mol) | |
|---|---|
| $H_2O/XO_2$ (mol/mol) | 3 à 250 |
| $P/XO_2$ (mol/mol) | 0 à 1 |
| $S/XO_2$ (g/g) | 0,0005 à 0,07 |

**10.** Procédé selon l'une des revendications 5 à 9 **caractérisé en ce que** le mélange réactionnel lors de la synthèse a la composition suivante, exprimée sous forme d'oxydes :

| $XO_2/T_2O_3$ (mol/mol) | 15-60 |
|---|---|
| $OH^-/XO_2$ (mol/mol) | 0,01 à 1 |
| $Q/XO_2$ (mol/mol) | 0,01 à 1 |
| $Q/(M^+ + Q)$ (mol/mol) | 0,1 à 1,0 |
| $H_2O/XO_2$ (mol/mol) | 5 à 100 |
| $P/XO_2$ (mol/mol) | 0 à 0,25 |
| $S/XO_2$ (g/g) | 0,001 à 0,04 |

**11.** Procédé selon l'une des revendications 1 à 10 **caractérisé en ce que** l'élément X est le silicium et l'élément T est l'aluminium.

**12.** Procédé selon l'une des revendications 1 à 11 **caractérisé en ce qu'**on réalise une étape finale de calcination.

**13.** Zéolithe de type structural EUO synthétisée selon l'une des revendications 1 à 11.

**14.** Zéolithe de type structural EUO synthétisée selon la revendication 12.

**15.** Utilisation de la zéolithe de type structural EUO selon l'une des revendications 13 ou 14 comme germes pour la synthèse de zéolithes de tout type structural.

**16.** Catalyseur comprenant une zéolithe de type structural EUO selon la revendication 14 ou synthétisée selon la revendication 12.

**17.** Catalyseur selon la revendication 16 **caractérisé en ce qu'**il comprend au moins un liant et au moins un métal du groupe VIII.

**18.** Catalyseur selon l'une des revendications 16 ou 17 **caractérisé en ce que** la zéolithe est au moins en partie sous forme acide.

**19.** Catalyseur selon l'une des revendications 16 à 18 **caractérisé en ce qu'**il comprend au moins un métal sélectionné dans le groupe constitué par les éléments des groupes IB, IIB, IIIA, IVA, VIB et VIIB.

**20.** Catalyseur selon l'une des revendication 16 à 19 **caractérisé en ce qu'**il comprend du soufre.

**21.** Procédé pour la transformation d'hydrocarbures comprenant la mise en contact d'une charge hydrocarbonée avec le catalyseur selon l'une des revendications 16 à 20.

**22.** Procédé selon la revendication 21 tel que le type de transformation d'hydrocarbures est l'isomérisation d'une coupe aromatique à 8 atomes de carbone.

**Claims**

**1.** Process for preparation of an EUO-structural-type zeolite that comprises at least one element X that is selected from among the silicon and germanium and at least one element T that is selected from among aluminum, iron, gallium, boron, titanium, vanadium, zirconium, molybdenum, arsenic, antimony, chromium and manganese, **characterized in that** it is carried out in the presence of a nitrogen-containing organic structuring agent Q that is selected from among the dibenzyldimethylammonium salts and the precursors that correspond to said salts selected among benzyldimethylamine, benzyl halide and benzyl alcohol and in the presence of nuclei S of at least one EUO-structural-type zeolitic material so as to synthesize an EUO zeolite that has an X/T ratio of between 6 and 35.

2. Process according to claim 1, wherein the EUO-structural-type zeolitic nuclei have an X/T ratio of between 5 and 100.

3. Process according to one of claims 1 or 2, wherein the EUO-structural-type zeolitic nuclei have an X/T ratio of between 5 and 50.

4. Process according to one of claims 1 to 3, wherein the EUO-structural-type zeolitic nuclei have a size of between 0.001 and 500 $\mu$m.

5. Process according to one of claims 1 to 4, wherein it comprises the mixture in aqueous medium of at least one source of at least one element X, at least one source of at least one element T, at least one source of said structuring agent and nuclei S of at least one EUO-structural-type zeolitic material.

6. Process according to one of claims 1 to 5, wherein in addition, at least one salt P of alkaline metal or ammonium is introduced.

7. Process according to one of claims 5 or 6, wherein the EUO-structural-type zeolitic nuclei are introduced at any time in the preparation.

8. Process according to one of claims 5 to 7, wherein the EUO-structural-type zeolitic nuclei are introduced after the homogenization at least in part of the aqueous mixture that contains element source X, element source T, said organic structuring agent.

9. Process according to one of claims 5 to 8, wherein the reaction mixture during synthesis has the following composition, expressed in oxide form:

| | |
|---|---|
| $XO_2/T_2O_3$ (mol/mol) | 12-70 |
| $OH^-/XO_2$ (mol/mol) | 0.005 to 1.5 |
| $Q/XO_2$ (mol/mol) | 0.005 to 1.5 |
| $Q/(M^+ + Q)$ (mol/mol) | 0.1 to 1.0 |
| $H_2O/XO_2$ (mol/mol) | 3 to 250 |
| $P/XO_2$ (mol/mol) | 0 to 1 |
| $S/XO_2$ (g/g) | 0.0005 to 0.07. |

10. Process according to one of claims 5 to 9, wherein the reaction mixture during synthesis has the following composition, expressed in oxide form:

| | |
|---|---|
| $XO_2/T_2O_3$ (mol/mol) | 15-60 |
| $OH^-/XO_2$ (mol/mol) | 0.01 to 1 |
| $Q/XO_2$ (mol/mol) | 0.01 to 1 |
| $Q/(M^+ + Q)$ (mol/mol) | 0.1 to 1.0 |
| $H_2O/XO_2$ (mol/mol) | 5 to 100 |
| $P/XO_2$ (mol/mol) | 0 to 0.25 |
| $S/XO_2$ (g/g) | 0.001 to 0.04. |

11. Process according to one of claims 1 to 10, wherein element X is silicon and element T is aluminum.

12. Process according to one of claims 1 to 11, wherein a final calcination stage is produced.

13. Synthesized EUO-structural-type zeolite according to one of claims 1 to 11.

14. Synthesized EUO-structural-type zeolite according to claim 12.

15. Use of the EUO-structural-type zeolite according to one of claims 13 or 14 as nuclei for the synthesis of zeolites of any structural type.

16. Catalyst that comprises an EUO-structural-type zeolite according to claim 14 or that is synthesized according to claim 12.

17. Catalyst according to claim 16, wherein it comprises at least one binder and at least one metal of group VIII.

18. Catalyst according to one of claims 16 or 17, wherein the zeolite is at least in part in acid form.

19. Catalyst according to one of claims 16 to 18, wherein it comprises at least one metal that is selected from the group that consists of the elements of groups IB, IIB, IIIA, IVA, VIB and VIIB.

20. Catalyst according to one of claims 16 to 19, wherein it comprises sulfur.

21. Process for the transformation of hydrocarbons that comprise bringing into contact a hydrocarbon feedstock with a catalyst according to one of claims 16 to 20.

22. Process according to claim 21, such that the type of transformation of hydrocarbons is the isomerization of an aromatic fraction with 8 carbon atoms.

**Patentansprüche**

1. Verfahren zur Herstellung eines Zeoliths des EUO-Typs, umfassend mindestens ein Element X, das aus Silizium und Germanium ausgewählt ist, und mindestens ein Element T, das aus Aluminium, Eisen, Gallium, Bor, Titan, Vanadium, Zirkonium, Molybdän, Arsen, Antimon, Chrom und Mangan ausgewählt ist, **dadurch gekennzeichnet, dass** es in Anwesenheit einer organischen stickstoffhaltigen Strukturierenden Q, die aus Dibenzyldimethylammoniumsalzen und den entsprechenden Vorläuferanstanzen dieser Salze ausgewählt ist, verwirklicht wird, wobei die Salze aus der Liste ausgewählt sind, die gebildet wird durch Benzyldimethylamin, Benzylhalogenid und Benzylalkohol und in Anwesenheit von Keimen S von mindestens einem Zeolithmaterial des EUO-Typs, sodass ein EUO-Zeolith mit einem Verhältnis X/T zwischen 6 und 35 synthetisiert wird.

2. Verfahren nach Anspruch 1, **dadurch gekennzeichnet, dass** die Zeolithkeime des EUO-Typs ein Verhältnis X/T zwischen 5 und 100 aufweisen.

3. Verfahren nach einem der Ansprüche 1 oder 2, **dadurch gekennzeichnet, dass** die Zeolithkeime des EUO-Typs ein Verhältnis X/T zwischen 5 und 50 aufweisen.

4. Verfahren nach einem der Ansprüche 1 bis 3, **dadurch gekennzeichnet, dass** die Zeolithkeime des EUO-Typs eine Größe von 0,001 bis 500 $\mu$m aufweisen.

5. Verfahren nach einem der Ansprüche 1 bis 4, **dadurch gekennzeichnet, dass** es das Mischen in wässrigem Medium von mindestens einer Quelle von mindestens einem Element X, von mindestens einer Quelle von mindestens einem Element T, von mindestens einer Quelle von der Strukturierenden und Keimen S von mindestens einem Zeolithmaterial des EUO-Typs umfasst.

6. Verfahren nach einem der Ansprüche 1 bis 5, **dadurch gekennzeichnet, dass** des Weiteren mindestens ein Salz P eines Alkalimetalls oder Ammonium eingeführt wird.

7. Verfahren nach einem der Ansprüche 5 oder 6, **dadurch gekennzeichnet, dass** die Zeolithkeime des EUO-Typs zu einem beliebigen Zeitpunkt der Herstellung eingeführt werden.

8. Verfahren nach einem der Ansprüche 5 bis 7, **dadurch gekennzeichnet, dass** die Zeolithkeime des EUO-Typs nach der Homogenisierung mindestens zum Teil in die wässrige Mischung, welche die Quelle der Elemente X, die Quelle der Elemente T, die organische Strukturierende enthält, eingeführt werden.

9. Verfahren nach einem der Ansprüche 5 bis 8, **dadurch gekennzeichnet, dass** das Reaktionsgemisch während der Synthese die folgende Zusammensetzung aufweist, die in Form von Oxiden ausgedrückt wird:

| | |
|---|---|
| $XO_2/T_2O_3$ (mol/mol) | 12-70 |
| $OH^-/XO_2$ (mol/mol) | 0,005 bis 1,5 |
| $Q/XO_2$ (mol/mol) | 0,005 bis 1,5 |
| $Q/(M^+ + Q)$ (mol/mol) | 0,1 bis 1,0 |
| $H_2O/XO_2$ (mol/mol) | 3 bis 250 |
| $P/XO_2$ (mol/mol) | 0 bis 1 |
| $S/XO_2$ (g/g) | 0,0005 bis 0,07 |

10. Verfahren nach einem der Ansprüche 5 bis 9, **dadurch gekennzeichnet, dass** das Reaktionsgemisch während der Synthese die folgende Zusammensetzung aufweist, die in Form von Oxiden ausgedrückt wird:

| | |
|---|---|
| $XO_2/T_2O_3$ (mol/mol) | 15-60 |
| $OH^-/XO_2$ (mol/mol) | 0,01 bis 1 |
| $Q/XO_2$ (mol/mol) | 0,01 bis 1 |
| $Q/(M^+ + Q)$ (mol/mol) | 0,1 bis 1,0 |
| $H_2O/XO_2$ (mol/mol) | 5 bis 100 |
| $P/XO_2$ (mol/mol) | 0 bis 0,25 |
| $S/XO_2$ (g/g) | 0,001 bis 0,04 |

11. Verfahren nach einem der Ansprüche 1 bis 10, **dadurch gekennzeichnet, dass** das Element X Silizium und das Element T Aluminium ist.

12. Verfahren nach einem der Ansprüche 1 bis 11, **dadurch gekennzeichnet, dass** ein abschließender Kalzinierugnsschritt durchgeführt wird.

13. Zeolith des EUO-Typs, der nach einem der Ansprüche 1 bis 11 synthetisiert wird.

14. Zeolith des EUO-Typs, der nach Anspruch 12 synthetisiert wird.

15. Verwendung des Zeoliths des EUO-Typs nach einem der Ansprüche 13 oder 14 als Keime für die Synthese von Zeolithen jedes beliebigen Typs.

16. Katalysator, umfassend einen Zeolithen des EUO-Typs nach Anspruch 14 oder synthetisiert nach Anspruch 12.

17. Katalysator nach Anspruch 16, **dadurch gekennzeichnet, dass** er mindestens ein Bindemittel und mindestens ein Metall der Gruppe VIII umfasst.

18. Katalysator nach einem der Ansprüche 16 oder 17, **dadurch gekennzeichnet, dass** der Zeolith mindestens teilweise in der sauren Form vorliegt.

19. Katalysator nach einem der Ansprüche 16 bis 18, **dadurch gekennzeichnet, dass** er mindestens ein Metall umfasst, das aus der Gruppe ausgewählt ist, bestehend aus den Elementen der Gruppen IB, IIB, IIIA, IVA, VIB und VIIB.

20. Katalysator nach einem der Ansprüche 16 bis 19, **dadurch gekennzeichnet, dass** er Schwefel umfasst.

21. Verfahren zur Umwandlung von Kohlenwasserstoffen, umfassend das Kontaktieren einer bituminösen Ladung mit dem Katalysator nach einem der Ansprüche 16 bis 20.

22. Verfahren nach Anspruch 21, wobei der Typ der Umwandlung von Kohlenwasserstoffen die Isomerisierung eines aromatischen Schnitts zu 8 Kohlenstoffatomen ist.

## RÉFÉRENCES CITÉES DANS LA DESCRIPTION

**Documents brevets cités dans la description**

- US 4723051 A
- US 4665258 A
- EP 0923987 A
- EP 0042226 A
- EP 0051318 A
- EP 0159845 A
- US 4640829 A

**Littérature non-brevet citée dans la description**

- **W. SOUVERIJNS et al.** *Microporous Materials,* 1995, vol. 4, 123-130
- **RAO et al.** *Zeolites,* 1989, vol. 9, 483-490